Europäisches Patentamt

European Patent Office

Office européen des brevets

(11) Publication number: **0 006 968**
A1

## (12) EUROPEAN PATENT APPLICATION

(21) Application number: 79100835.2

(22) Date of filing: 19.03.79

(51) Int. Cl.³: **C 08 F 10/00**
**C 08 F 4/64**

(30) Priority: 13.07.78 US 924120

(43) Date of publication of application:
23.01.80 Bulletin 80/2

(84) Designated Contracting States:
BE DE FR GB NL

(71) Applicant: Continental Oil Company
P.O. Box 1267
Ponca City Oklahoma 74601(US)

(72) Inventor: Mack, Mark Philip
301 W. Hartford Apt. 311
Ponca City Oklahoma 74601(US)

(74) Representative: Patentanwälte Dipl.-Ing. A. Grünecker,
Dr.-Ing. H. Kinkeldey, Dr.-Ing. W. Stockmair,
Dr. rer. nat. K. Schumann, Dipl.-Ing. P. Jakob, Dr. rer. nat.
G. Bezold Maximilianstrasse 43
D-8000 München 22(DE)

(54) A method for producing high molecular weight stereoregular polymers in the presence of a modified catalyst system.

(57) An improved method for polymerizing alpha-olefins under low pressure in the presence of a modified Ziegler-Natta catalyst comprising a mixture of an organo-aluminum compound and a compound of a transition metal of groups IV-B, V-B, VI-B, and VII-B of the Periodic Table, together with a quantity of Groups I-A and II-A organophosphide in an amount of from about .01 to about .15 moles bases upon the amount of organo-aluminum compounds present. Catalysts of the instant invention provide highly isotactic polymers. The amount of metal organophosphide added is critical to obtaining these objectives.

EP 0 006 968 A1

This invention relates to a method for producing high molecular weight stereoregular polymers. More particularly, this invention relates to a modified catalyst system for producing high molecular weight stereoregular isotactic polymers using Ziegler-Natta catalysts and a small amount of Group I-A and/or II-A organophosphides.

Two component systems for polymerizing α olefins for the production of polymers comprising of organo aluminum compounds and transition metal salts and halides are known as described in U.S. Patent 3,113,115 issued to Ziegler et al. Such catalysts have become well-known generally as Ziegler-Natta catalyst systems. A variety of compounds have been identified as effective modifiers to the conventional system described in the referenced patent. Many patents are directed toward processes for improving the stereospecificity of the polymerization of alpha-olefins, particularly butene, when using the catalysts of the Ziegler-Natta type. For example, British Patent 1,421,217 describes the use of hydrazine derivatives such as 1,1-dimethylhydrazine to increase stereospecificity. U.S. Patent 3,318,860 teaches a third component comprising of a nitrogen-containing Lewis base and then treating the modified Ziegler-Natta catalyst so obtained with hydrogen. This modification of the catalyst system is taught to produce isotactic polymers having both reduced molecular weight and a high degree of stereoregularity. However, for many applications of polymers obtained using these systems, a high molecular weight is greatly desired. For example, when used for reducing the flow of liquids through pipelines, such polymers are commonly called drag reducing agents, and of necessity are of high molecular weight in order to be effective as drag reducers.

Thus it is known that alpha-olefins such as propylene and 1-butene can be converted to highly linear crystalline polymers at low temperatures using a Ziegler-Natta catalyst. Crystalline polymers can be produced using such systems. The crystallinity of the polymer obtained is due to the arrangement of the substituents along a polymer backbone. In general, isotactic polymers have a strictly regular arrangement of substituents; syndiotactic polymers have a regularly alternating pattern of substituents; atactic polymers have a completely at random pattern of substituents. The high 0006968
molecular weight isotactic polymers are commercially useful.
However, the basic Ziegler-Natta catalyst, comprising of
an organo-metallic complex generated through the reaction of
a transition metal compound such as titanium trichloride
with an organo-aluminum compound such as aluminum triethyl,
is not free from disadvantages. In addition, the catalysts
residues must be removed from the polymers since these
substances have a detrimental influence on polymer properties
such as color and light stability. Thus, modifications such
as described above have been made to the basic catalyst.

Another disadvantage of the basic Ziegler-Natta
catalyst is the low degree of tacticity. The degree of
tacticity is a measure of the isotactic index, which is
defined as the weight of the polymer insoluble in boiling
diethylether. Highly stereoregular or isotactic polymers
are to be greatly desired toward the preparation of film,
pipe, packaging, lenses, and other useful articles of commerce.

Other references, such as U.S. Patent 3,476,730,
hereby incorporated by reference, teach a process of polymerization of olefins in the presence of mixed catalysts of
the Ziegler-Natta type which contain third components.
An extensive list of third components is proposed in this
reference. In addition, United States Patent 3,635,839
teaches a modified catalyst system for stereospecific
polymerization of olefins. This reference substitutes
the reaction product of a dialkylaluminum chloride reaction
with iodine in place of the organoaluminum compound proposed
by the basic Ziegler-Natta system. The result of such a
reaction would be expected to be a dialkylaluminum chloride-
iodide mixture. U.S. Patent 3,051,690, hereby incorporated
by reference, utilizes hydrogen as a means of regulating
molecular weight.

However, none of these references, whether taken
alone or in combination, provide an acceptable method for
obtaining high molecular weight, highly regular, isotactic
polymers. Such high molecular weight polymers would be
extremely useful in applications such as reducing the flow
resistance of fluids through pipelines. Highly isotactic
polymers are very useful in the manufacture of pipe and films, lowering the molecular[3] weight by carrying out polymerization reactions in the presence of hydrogen $(H_2)$. It would therefore be of great benefit to provide a method for producing polymers from alpha-olefins having a high molecular weight and/or a highly isotactic structure.

It is therefore an object of the instant invention to provide a process for producing a highly isotactic polyolefins, particularly poly-1-butene, while optionally obtaining a high molecular weight polymer. Other objects will become apparent to those skilled in this art as the description proceeds.

It has now been discovered that a highly isotactic, high molecular weight polymers can be obtained from alpha-olefins when polymerization is carried out in the presence of a catalyst system comprising a compound of a transitional metal of groups IV-B, V-B, VI-B, and VII-B of the Periodic Table in which the metal is in a reduced valence state, and an organoaluminum halide, together with a limited amount of Group I-A or II-A metal organophosphide, said amount being from about .01 to about .15 moles of metal organophosphide based on the amount of the organoaluminum halide present. Amounts higher than .15 and lower than .01 are within the scope of this invention, but is must be realized that no gain in isotactivity and molecular weight will be obtained.

Olefins which can be polymerized using the process of the instant invention are those having the formula $CH_2=CHR$ in which R represents an aliphatic hydrocarbon radical with up to about 10 carbon atoms or a cyclic or aromatic hydrocarbon radical. Representative examples of such olefins are ethylene, butene and propylene. However, higher olefins, as well as these materials, can be used to form copolymers, one with another.

The polymerization of these materials is usually carried out in a slurry in liquid butene or inert diluent such as heptane, octane, benzene, or other diluents known to the art. In the case of butene-1 and higher olefins however, it is preferred to use the solution polymerization techniques described in U.S. Patent 3,362,940, hereby incorporated by reference.

The preparation of the catalyst of the instant invention can be by any one of several methods. The most preferred method is simply preparing the desired Ziegler 0006968
Natta basic catalyst, and adding lithium diphenylphosphide
to the catalyst while in the reactor. However, the catalyst
can be totally prepared outside the reactor by techniques
well-known to those skilled in the art, including co-
crystallization and ball milling techniques. The addition
of the metal organophosphide prior to insertion into the
reactor does not affect the catalyst or the method of
carrying out the polymerization. Thus, metal organophosphide may be added before, during or after the charging
of the Ziegler-Natta catalyst of olefin.

The instant invention provides an improved process
for polymerizing alpha-olefins to isotactic polymers, the
improvement comprising carrying out the polymerization in
the presence of a catalyst comprising dialkylaluminum halides,
titanium trichloride, and Groups I-A or II-A organophosphides,
wherein the metal organophosphide is present in the catalyst
in amounts of from about .01 to about .15 mole per mole of
dialkylaluminum halide. Generally, the Group I-A metal organophosphide modifier has the formula $M P R_1 R_2$, wherein M is an
alkali metal and $R_1$ and $R_2$ are, independently, aryl, alkyl,
aralkyl or alkaryl. When Group II-A metals are used, the
modifier has the formula $M(PR_1R_2)_2$, where M is a Group II-A
metal and $R_1$ and $R_2$ are as described above.

Representative examples of such catalyst modifiers
are lithium diphenylphosphide, sodium dibutylphosphide,
potassium di(phenylmethyl) phosphide, rubidium dibenzylphosphide, cesium butylphenylphosphide, lithium (methylphenyl)
phenylmethyl phosphide, potassium (phenylmethyl) methyl
phosphide, sodium phenyl (methylphenyl) phosphide, beryllium
diphenylphosphide, magnesium di(phenylmethyl) phosphide,
calcium dibutylphosphide, strontium dibenzylphosphide, and
barium butylphenylphosphide.

Of these, diphenylphosphides are preferred. Representative examples of such diphenylphosphides are those
having Group I-A and II-A cations, such as lithium diphenylphosphide, sodium diphenylphosphide, potassium diphenylphosphide,
rubidium diphenylphosphide, cesium diphenylphosphide, beryllium
diphenylphosphide, magnesium diphenylphosphide, calcium
diphenylphosphide, strontium diphenylphosphide, and barium
diphenylphosphide.

Polymerizations are generally carried out at temperatures less than 250°C and pressures less than 150 atmospheres, but can be carried out within a temperature range of from about ~10°C to about 250°C and preferably between 10°C and about 150°C., and pressures of about ambient, or preferably at pressures of from about 1 to 50 atmospheres. It is realized that higher pressures can be used to increase the reaction rate; however, such pressures are not normally necessary.

Representative examples of dialkyl aluminum halides useful in the practice in the instant invention are diethyl aluminum chloride, dibutyl aluminum chloride, and ethylbutyl aluminum chloride. Representative examples of transition metal halides are violet titanium trichloride, vanadium trichloride and vanadium trichloride oxide.

Should highly isotactic polymers of lower molecular weight be desired, the catalyst system of the instant invention could be utilized in conjunction with hydrogen during polymerization to lower molecular weight to desired levels. This procedure is set forth in U.S. Patent 3,056,690, and is entirely compatible with the instant invention to produce highly isotactic polymer of desired molecular weight.

The invention is more concretely described with reference to the examples below wherein all parts and percentages are by weight unless otherwise specified. The examples are provided to illustrate the instant invention and do not limit it.

Example 1 is a comparative example wherein a polymerization is carried out in the absence of a lithium diphenylphosphide stereoregulator and molecular weight amplifier. Example 2 shows an identical reaction carried out using lithium diphenylphosphide. Examples 3 and 4 vary the amount of lithium diphenylphosphide added.

Ziegler-Natta catalyst is obtained by reacting a salt or oxide of a metal of Group IV-B, V-B, VI-B, VII-B, or VIII with a organometallic compound for Group I-A, II-A, or III-A.

### Example 1

A 1 quart pressure vessel was charged with 300 milliliters (ml) of n-heptane (dried over molecular sieves and degassed) followed by 5 ml of diethylaluminum chloride
(DEAC) heptane solution containing 2.94 millimoles (mmol)
of DEAC under an inert atmosphere of dry argon. The mixture
was allowed to react for 5 minutes at room temperature with
stirring. A transition metal compound, 1.1 mmol of titanium
trichloride (Stauffer Chemical Company's catalyst designated
AA TYPE 1.1 [Aluminum Reduced and Activated; formula
$(TiCl_3)_3 AlCl_3$]) was added. The catalyst mixture was warmed
to 66°C ($\pm$ 1°C) and stirred at 150 revolutions per minute
(rpm) for 15 minutes. The rate of stirring was increased to
250 rpm for 5 minutes and 1-butene was fed continuously over
a period of 2 hours at 23.5 psig and 66°C. The reaction was
quenched with 5 ml of isopropanol and the polymer was
allowed to precipitate overnight in 1000 ml of isopropanol.
The poly-1-butene so obtained was filtered from the liquid
and washed with 500 ml of isopropanol. The polymer was
treated with anti-oxidant (mixture of Irganox ® 1076,
trademark of and sold by Ciba-Geigy Corporation and Carstab
DSTDP Antioxidant, trademark of and sold by Cincinnati
Milacron Co.) and the volatile solvents were removed in a
vacuum oven overnight at 66°C.

### Example 2

The polymerization run was carried out exactly as
described in Example 1 except that .05 mmol of lithium
diphenylphosphide (as a solid) was added to the pressure
vessel immediately after the heptane solution containing
DEAC and prior to titanium chloride.

### Example 3

Polymerization was carried out exactly as described
in Example 2 except that .11 mmol of lithium diphenylphosphide
was added.

### Example 4

The polymerization was carried out exactly as
described in Example 2 except that .33 mmol of lithium
diphenylphosphide was added.

### Example 5

A 1-quart pressure vessel containing 300 ml of n-
heptane followed by 5 ml of a solution of DEAC and heptane
containing 2.94 mmol of DEAC was placed under an inert atmosphere of dry argon. The transition metal compound and mmol Stauffer Catalyst Type AA, trademark of and sold by Stauffer Chemical Company, composition $(TiCl_3)_3AlCl_3$ was added. The mixture was stirred at room temperature for 5 minutes under the atmosphere of argon and .11 mmols lithium diphenylphosphide stereoregulator and amplifier was added. The catalyst mixture was allowed to react for 2 hours at room temperature, then warmed to about 66°C (± 1°C) and stirred at 150 rpm for 20 minutes. The rate of stirring was increased to 250 rpm for 5 minutes and 1-butene was fed continuously for a period of 2 hours at 23.5 psig. The reaction was quenched with isopropanol and the polymer recovered as described in Example 1.

In all examples the data was collected and set forth in tabular form in Table 1. In Table 1, activity is expressed as grams of polybutene produced per gram of titanium used per hour in heptane at a temperature of 66°C and a pressure of 23.5 psig. The isotactic index (II) is defined as the weight percent of poly-1-butene insoluble in boiling diethyl ether. The specific viscosity was determined in decalin at 115°C. In Example 5 the order of addition was DEAC/titanium trichloride (AA)/lithium diphenylphosphide.

Table 1

EFFECT OF LITHIUM DIPHENYL PHOSPHIDE ON ISOTACTICITY

| Example | mmol, DEAC | mmol, $\phi_2$PLi | mmol, $TiCl_3$(AA) | Catalytic Activity | % II |
|---------|-----------|----------|----------|-----------|------|
| 1 | 2.94 | 0.00 | 1.14 | 112.0 | 89.1 |
| 2 | 2.94 | 0.05 | 1.08 | 85.8 | 93.6 |
| 3 | 2.94 | 0.11 | 1.06 | 78.6 | 94.7 |
| 4 | 2.94 | 0.33 | 1.18 | 53.1 | 93.2 |
| 5 | 2.94 | 0.11 | 1.06 | 55.6 | 93.7 |

The catalyst and process of the instant invention likewise raises the molecular weight of the polymer produced as shown by the following examples. In all examples the average molecular weight of the polybutene-1 produced was calculated using the following equation:

$$[N] = \frac{N_{sp} \quad N}{C(N_{sp}+N)}$$

wherein $[N]$ is the intrinsic viscosity. This method is described in detail in Appl. Polym. Sci, 4 (10), 92-94 (1960), Valles et al. In decalin at 115°C, $N = 2.08$ and the concentration $C = .2$ grams polybutene per 100 ml of decalin. Once $[N]$ is determined, the Mark-Houwink equation was then employed to calculate the average molecular weight M using the following equation.

$$[N] = K \, M^a$$

For isotactic polybutene-1 and decalin at 115°C $K=9.49 \times 10^{-5}$ and a is .73.

In the following examples, Example 8 was carried out by adding lithium diphenylphosphide molecular weight modifier after the addition of titanium trichloride (AA) to DEAC. The order of addition in this experiment was DEAC/ titanium trichloride (AA)/lithium diphenylphosphide.

Example 6 was carried out under identical conditions of the instant invention except that no lithium diphenylphosphide was used, the example being provided for comparative purposes.

Example 6

A 1-quart pressure vessel containing 300 ml of dried and degassed n-heptane was utilized. To this vessel was added 2.94 mmol of diethyl aluminum chloride followed by the addition of titanium trichloride of type (AA)(Trademark of and sold by Stauffer Chemical Company) under an inert atmosphere of dry argon. The resulting mixture was heated to 66°C ($\pm$ 1°C) and stirred at 150 rpm for 15 minutes. The rate of stirring was increased to 250 rpm for a period of 5 minutes, following which butene-1 was charged to reach and maintain the reaction pressure of 23.5 psig. The polymerization reaction was terminated after 120 minutes by using 5 ml of isopropanol. An additional 1000 ml of isopropanol was added and the polymer was allowed to precipitate overnight. The polymer was removed from the supernatant liquid by vacuum filtration, washed with additional isopropanol, stabilized as described in Example 1 and dried in a vacuum oven. In order to determine the molecular weight, the specific viscosity was determined in decalin at 115°C and the molecular weight was calculated using the method described above.

## Example 7

This reaction was carried out exactly as described in Example 6 except that lithium diphenylphosphide was added after the diethyl aluminum chloride was inserted into the pressure vessel containing n-heptane, prior to the addition of titanium trichloride.

## Example 8

The experiment was carried out exactly as described in Example 7 except that the lithium diphenylphosphide modifier was added to the reaction after the addition of titanium trichloride (AA) to the DEAC solution.

## Example 9

This reaction was carried out exactly as described in Example 7 except that the amount of lithium diphenylphosphide added to the polymerization mixture was increased.

## Example 10

This reaction was carried out exactly as described in Example 7 except that the amount of lithium diphenylphosphide was increased to .33 mmol.

The results for Examples 6-10 are shown in tabular form in Table 2. In the table, the activity is expressed as grams of polybutene-1 produced per gram of titanium used per hour in heptane at 66°C and 23.5 psig. $N_{sp}$ is the specific viscosity in decalin at 115°C while M is the average molecular weight calculated from $N_{sp}$ using the equations described.

### Table 2

#### EFFECT OF LITHIUM DIPHENYLPHOSPHIDE ON AVERAGE MOLECULAR WEIGHT

| Example | mmol DEAC | mmol $\emptyset_2$PLi | mmol $TiCl_3$(AA) | Catalytic Activity | Specific Viscosity (Nsp) | Calc Ave M Wgt ($Mx10^{-5}$) | % Increase in M Wgt. |
|---------|-----------|-----------------------|-------------------|--------------------|--------------------------|------------------------------|----------------------|
| 6 | 2.94 | 0.00 | 1.14 | 112 | 0.548 | 9.27 | * |
| 7 | 2.94 | 0.05 | 1.08 | 85.8 | 0.577 | 9.80 | 18.5 |
| 8 | 2.94 | 0.11 | 1.06 | 55.6 | 0.643 | 11.0 | 18.7 |
| 9 | 2.94 | 0.11 | 1.06 | 78.6 | 0.735 | 12.6 | 35.9 |
| 10 | 2.94 | 0.33 | 1.18 | 53.1 | 0.731 | 12.6 | 35.9 |

As indicated above in the examples and tables of the instant invention, the degree of tacticity of polymer product is measured as the isotactic index (II). In the case of butene and higher polymers, the II is the weight percent of polymer insoluble in diethyl ether.

While certain embodiments and details have been shown for the purpose of illustrating this invention, it will be apparent to those skilled in this art that various changes and modifications may be made herein without departing from the spirit or the scope of the invention.

I claim:

1.  A method for polymerizing α-mono olefins to iso-
tactic high molecular weight polymers comprising carrying
out the polymerization in the presence of a catalyst comprising dialkylaluminum halide, titanium chloride, and
Groups I-A and/or II-A metal organophosphides, wherein the
metal organophosphide is present in the catalyst in
amounts of from about .01 to about .15 moles per mole of
dialkylaluminum halide.

2.  A method as described in Claim 1 wherein the metal
organophosphide is a metal diphenylphosphide.

3.  A method as described in Claim 1 wherein the
dialkylaluminum halide is diethylaluminum chloride and wherein
the metal diphenylphosphide of lithium diphenylphosphide.

4.  A method as described in Claim 1 wherein the
reaction is carried out at a temperature of from about ‾10°C
to about 250°C and a pressure of from about ambient to about
50 atmospheres.

5.  A method for increasing the molecular weight of
polymers produced from alpha olefins using transition metal
halides and organometallic alkylating agents, comprising
adding organometallic phosphides to the catalyst prior to
carrying out the polymerization in amounts from about .01
to about .5 moles per mole of dialkylaluminum chloride.

6.  A method as described in Claim 5 wherein the
transition metal halide is violet titanium trichloride, the
organometallic phosphide is lithium diphenylphosphide, and
the organometallic alkylating agent is diethylaluminum
chloride.

7.  A method as described in Claim 6 wherein the
polymer is produced using alpha olefins selected from the
group consisting of propylene, butene-1, octene-1, and 4-
methyl-1-pentene.

0006968

8.     A method for producing highly isotactic polyolefin polymers having low molecular weight comprising polymerizing olefins in the presence of a catalyst comprising dialkylaluminum halide, titanium chloride, and Group I-A and/or II-A metal organophosphides; wherein the metal organophosphide is present in the catalyst in amounts of from about .01 to about .15 moles per unit of dialkyl aluminum halide and where sufficient hydrogen is added to the polymerization to reduce molecular weight to the desired level.

9.     A method as described in Claim 8 wherein the metal organophosphide is a Group I-A metal diphenylphosphine.

10.     A method as described in Claim 9 wherein the dialkyl aluminum halide is diethyl aluminum chloride and the metal diphenylphosphide is lithium diphenylphosphide.

## DOCUMENTS CONSIDERED TO BE RELEVANT

| Category | Citation of document with indication, where appropriate, of relevant passages | Relevant to claim |
|---|---|---|
| A | US - A - 3 951 858 (H. SCHICK et al.) <br><br> * Claims 1,2,4; column 2, lines 22-36; example * <br><br> ---- | 1 |

**CLASSIFICATION OF THE APPLICATION (Int. Cl. ⁴)**

C 08 F 10/00
4/64

**TECHNICAL FIELDS SEARCHED (Int.Cl. ³)**

C 08 F 10/00-
10/14
110/00-
110/14
210/00-
210/18
4/64

**CATEGORY OF CITED DOCUMENTS**

X: particularly relevant
A: technological background
O: non-written disclosure
P: intermediate document
T: theory or principle underlying the invention
E: conflicting application
D: document cited in the application
L: citation for other reasons

&: member of the same patent family, corresponding document

The present search report has been drawn up for all claims

| Place of search | Date of completion of the search | Examiner |
|---|---|---|
| The Hague | 17-10-1979 | WEBER |

EPO Form 1503.1    06.78